# EUROPÄISCHE PATENTSCHRIFT

(11) **EP 1 457 640 B1**
(45) Veröffentlichungstag und Bekanntmachung des Hinweises auf die Patenterteilung: **16.01.2008**
(21) Anmeldenummer: 04005316.7
(22) Anmeldetag: 05.03.2004
(51) Int. Cl.: F01D 5/08, F02C 7/18, F04D 27/02

(54) **Wirbelgleichrichter in Röhrenbauweise mit Haltering für Gasturbinen**
Tubular vortex streamer for gas turbine and their support ring
Redresseur tubulaire de vortex pour turbine à gaz et sa structure de support

(30) Priorität: 12.03.2003 DE 10310815
(43) Veröffentlichungstag der Anmeldung: 15.09.2004
(73) Patentinhaber: Rolls-Royce Deutschland Ltd & Co KG, 15827 Dahlewitz (DE)
(72) Erfinder: Fitzgerald, Ian, 15732 Eichwalde (DE); Seydel, Christian, 14532 Stahnsdorf (DE)
(74) Vertreter: Weber, Joachim

(56) Entgegenhaltungen:
- US-A- 4 576 547
- US-A- 5 267 832
- US-A1- 2002 182 059

## Beschreibung

Die Erfindung bezieht sich auf einen Wirbelgleichrichter in Röhrenbauweise gemäß den Merkmalen des Oberbegriffs des Hauptanspruchs.

Im Einzelnen bezieht sich die Erfindung auf einen Wirbelgleichrichter zur Kühlluftführung in einem Verdichter einer Gasturbine mit sich radial erstreckenden, in einer Zwischenscheibenkammer angeordneten Sekundärluftröhren, welche an ihrem radial äußeren Endbereich an einer Verdichterscheibe befestigt sind.

Aus dem Stand der Technik sind Ausgestaltungen bekannt, bei welchen die Sekundärluftröhren mit entsprechenden Halterungen der Scheiben verpreßt, vernietet, verschraubt, verschnappt oder verschmiedet sind. Hierbei erweist es sich als nachteilig, dass ein ausreichend großer Arbeitsraum erforderlich ist, um die Montage der Sekundärluftröhren mittels geeigneter Werkzeuge durchzuführen. Dies wiederum erfordert einen relativ großen Querschnitt der Sekundärluftkammer, durch welche die Sekundärluft in die Sekundärluftröhren einströmt. Hierdurch wiederum ergeben sich hohe Fertigungskosten. Zusätzlich besteht die Gefahr, dass die Verdichterscheibe bei der Montage der Sekundärluftröhren beschädigt wird. Da diese sehr teuer ist, ist dieses Risiko auch ein ganz erhebliches Kostenargument.

Ein Wirbelgleichrichter gemäß dem Stand der Technik ist aus dem Dokument US 5267832 bekannt.

Der Erfindung liegt die Aufgabe zugrunde, einen Wirbelgleichrichter in Röhrenbauweise der eingangs genannten Art zu schaffen, welcher bei einfachem Aufbau und einfacher, betriebssicherer Einsetzbarkeit kostengünstig und sicher herstellbar ist.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass der Endbereich der Sekundärluftröhre an einem separaten, in Segmente unterteilten Trägerring befestigt ist, welcher mit einer der Verdichterscheiben separat verbunden ist.

Der erfindungsgemäße Wirbelgleichrichter zeichnet sich durch eine Reihe erheblicher Vorteile aus.

Zunächst ermöglicht die erfindungsgemäße Konstruktion die Befestigung der Sekundärluftröhren durch den Trägerring. Eine Montage an den Verdichterscheiben selbst ist somit nicht nötig. Hierdurch können Schädigungen der Verdichterscheibe selbst ausgeschlossen werden.

Ein weiterer, wesentlicher Vorteil besteht darin, dass der Querschnitt der Sekundärluftkammer klein gehalten werden kann, da in diese keine Werkzeuge oder Ähnliches für die Montage der Sekundärluftröhren eingeführt werden müssen. Insgesamt ergibt sich hierdurch eine Erhöhung der Steifigkeit der Verdichterscheiben, welche zusätzlich zu einer Reduktion von Schwingungen führt.

Durch die gewählte erfindungsgemäße Montagemöglichkeit werden Beschädigungen durch das Verstemmen wie Kratzer, Kerben oder Ähnliches der Verdichterscheiben gänzlich ausgeschlossen, sodass vorzeitiges Versagen oder Nacharbeiten nicht auftreten.

Besonders günstig ist es, wenn die Sekundärluftröhren formschlüssig mit dem Trägerring verbunden sind. Dies kann bevorzugter Weise dadurch erfolgen, dass diese an ihrem Endbereich einen Lagerschuh umfassen, welcher in eine Nut des Trägrrings einschiebbar und mittels eines Klemmteils fixierbar ist. Hierdurch ergibt sich ein hohes Maß an axialer Stabilität. Weiterhin vereinfacht sich die Montage ganz erheblich.

Bevorzugter Weise ist erfindungsgemäß der Trägerring als Winkelprofil ausgestaltet. Hierdurch erhöht sich zum einen die Eigenstabilität des Trägerrings, zum anderen ist es möglich, an diesem Bolzen Ausnehmungen vorzusehen, sodass der Trägerring mittels axial ausgerichteter Bolzen an einer der Verdichterscheiben befestigt werden kann.

Durch die unterschiedliche Anordnung der Nuten und der Bolzenausnehmungen ergibt sich ein montagefreundlicher, platzsparender Aufbau, da die Bolzenausnehmungen jeweils mittig zwischen zwei benachbarten Nuten angeordnet werden können.

Zur Vereinfachung der Montage kann der Trägerring erfindungsgemäß in mehrere Segmente aufgeteilt werden, beispielsweise drei Segmente. Der Trägerring kann ohne Verspannung der Segmente in die Zwischenscheibenkammer eingeschoben werden.

Um den radial innen liegenden Endbereich der Sekundärluftröhre sicher zu haltern, ist es besonders günstig, wenn diese formschlüssig an der Verdichterscheibe fixiert ist. Hierbei sind keine separaten Werkzeuge nötig, die wiederum Arbeitsraum benötigen würden oder zu Beschädigungen führen könnten.

Im Folgenden wird die Erfindung anhand von Ausführungsbeispielen in Verbindung mit der Zeichnung beschrieben. Dabei zeigt:
- Fig. 1: eine schematische Teil-Ansicht eines Ausgestaltungsbeispiels gemäß dem Stand der Technik,
- Fig. 2: eine Ansicht, analog Fig. 1, eines weiteren Ausführungsbeispiels gemäß dem Stand der Technik,
- Fig. 3: eine Schnittansicht, analog den Fig. 1 und 2 eines ersten Ausführungsbeispiels der Erfindung,
- Fig. 4: eine stirnseitige Teil-Ansicht der erfindungsgemäßen Anordnung,
- Fig. 5: eine Schnittansicht links der Linie V-V von Fig. 4,
- Fig. 6: eine Schnittansicht längs der Linie VII-VII von Fig. 4,
- Fig. 7: eine stirnseitige Ansicht des erfindungsgemäßen Trägerrings sowie einzelner, diesen bildender Segmente,
- Fig. 8: eine perspektivische Ansicht des erfindungsgemäßen Trägerrings,
- Fig. 9: eine vergrößerte Teil-Darstellung des in Fig. 8 gezeigten Trägerrings,
- Fig. 10: eine Darstellung, analog Fig. 8 und 9, in einem ersten Montageschritt der Sekundärluftröhren an dem Trägerring,
- Fig. 11: eine Darstellung eines endgültigen Montageschritts in Nachfolge nach der Darstellung der Fig. 10,
- Fig. 12: eine vergrößerte Darstellung der Montage der Sekundärluftröhren mittels eines Klemmteils,
- Fig. 13: eine Darstellung, analog Fig. 12, des fertig montierten Zustands,
- Fig. 14: eine perspektivische Teil-Ansicht in Zuordnung des Trägerrings zu den Verdichterscheiben,
- Fig. 15: eine Darstellung, analog Fig. 14, mit vormontierten Sekundärluftröhren,
- Fig. 16: eine Darstellung, analog Fig. 14 und 15, mit fertig montierten Sekundärluftröhren, und
- Fig. 17: eine vereinfachte Schnittansicht eines Teils einer erfindungsgemäße Gasturbine unter Verwendung der Erfindung.

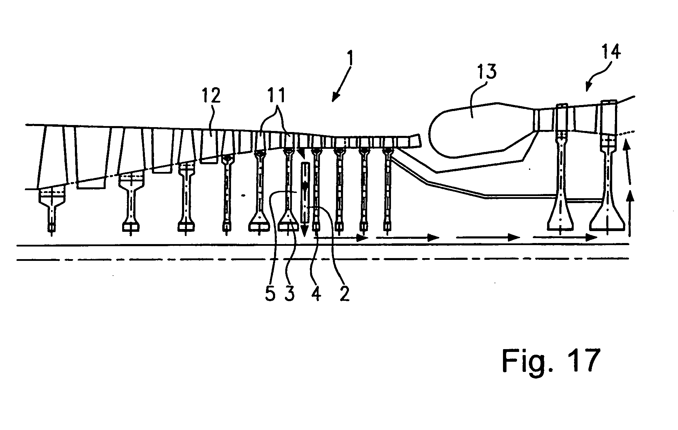

Die Fig. 17 zeigt eine Teil-Schnittansicht einer erfindungsgemäßen Gasturbine. Das Bezugszeichen 1 zeigt einen Verdichter, welcher Rotorschaufeln 11 und Statorschaufeln 12 umfasst. Die Rotorschaufeln 11 sind an Verdichterscheiben 3 bzw. 4 befestigt. Diese bilden eine Zwischenscheibenkammer 5, in welcher mehrere radial angeordnete Sekundärluftröhren 2 angeordnet sind. Mit dem Bezugszeichen 13 ist eine Brennkammer angedeutet, das Bezugszeichen 14 zeigt schematisch eine Turbine. Durch die Pfeile ergibt sich der schematische Verlauf der Sekundärluftführung.

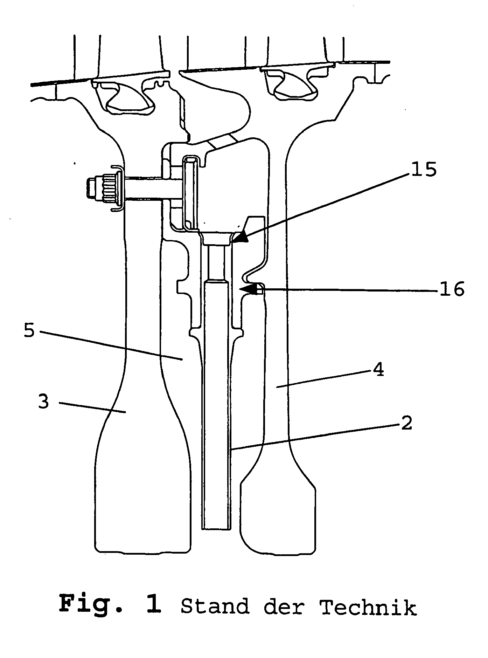

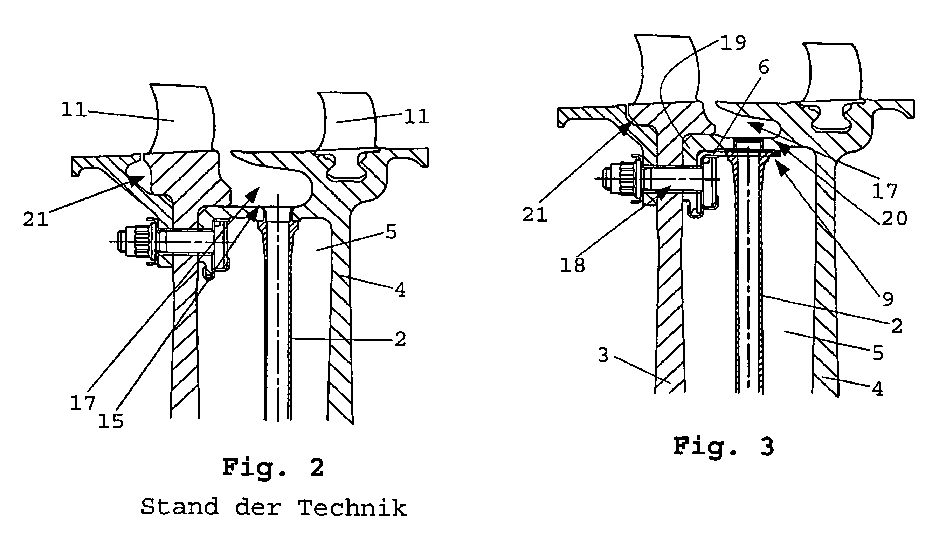

Die Fig. 1 und 2 zeigen Ausführungsbeispiele aus dem Stand der Technik. Dabei ist ersichtlich, dass die Endbereiche der Sekundärluftröhren vernietet sind, so wie sich dies durch das Bezugszeichen 15 ergibt. Mit dem Bezugszeichen 16 ist eine zusätzliche Trägerscheibe gezeigt, welche ein zusätzliches volumenmäßiges Bauteil bildet und in der Zwischenscheibenkammer 5 montiert ist.

Die Fig. 2 zeigt ein ähnliches Ausführungsbeispiel, bei welchem das Bezugszeichen 15 wiederum eine Nietverbindung zeigt. Dabei ist insbesondere ersichtlich, dass eine sehr große Sekundärluftkammer 17 erforderlich ist, um das Nietwerkzeug einzuführen.

Die Fig. 3 zeigt ein erstes Ausführungsbeispiel der Erfindung. Dabei ist ersichtlich, dass das freie Ende der Sekundärluftröhre an einem mit einem Winkelprofil ausgebildeten Trägerring 6 gelagert ist. Die Sekundärluftkammer 17 kann sehr klein dimensioniert werden, da in diese kein Verpresswerkzeug eingeführt werden muss. Der Trägerring 6 ist mittels Bolzen 18 mit der Verdichterscheibe 3 verschraubt. Der Bolzen 18 lagert weiterhin einen Lagerschenkel 19 der weiteren Verdichterscheibe 4. Durch die erfindungsgemäß mögliche Dimensionierung und Ausgestaltung des Trägerrings 6 kann der Lagerschenkel 19 sehr günstig gestaltet werden, sodass sich ein vergrößerter, verbesserter Radius 20 des Lagerschenkels 19 ergibt. Weiterhin kann eine Kammer 21 am radial äußeren Ende der Verdichterscheibe 3 minimiert werden.

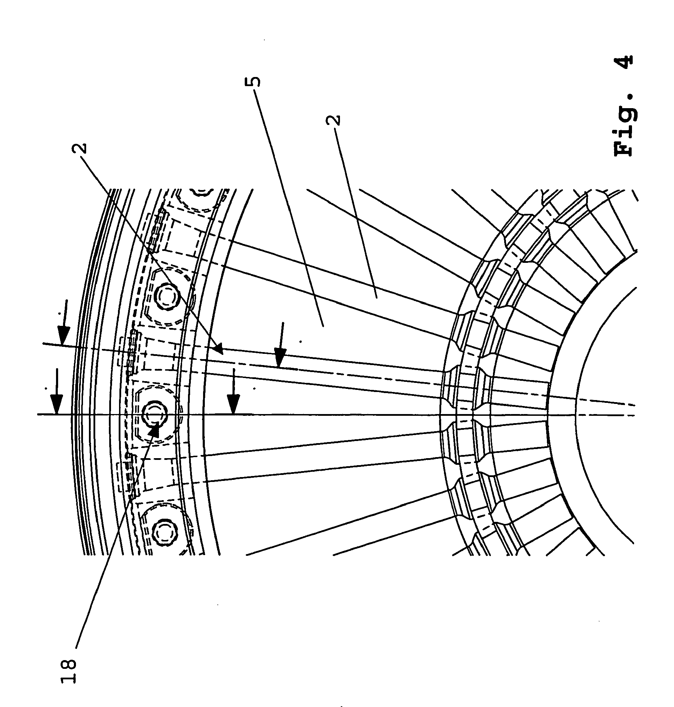

Die Fig. 4 zeigt eine axiale Teil-Ansicht, aus welcher ersichtlich wird, dass die Bolzen 18 sowie die Sekundärluftröhren 2 am Umfang alternierend zueinander versetzt sind.

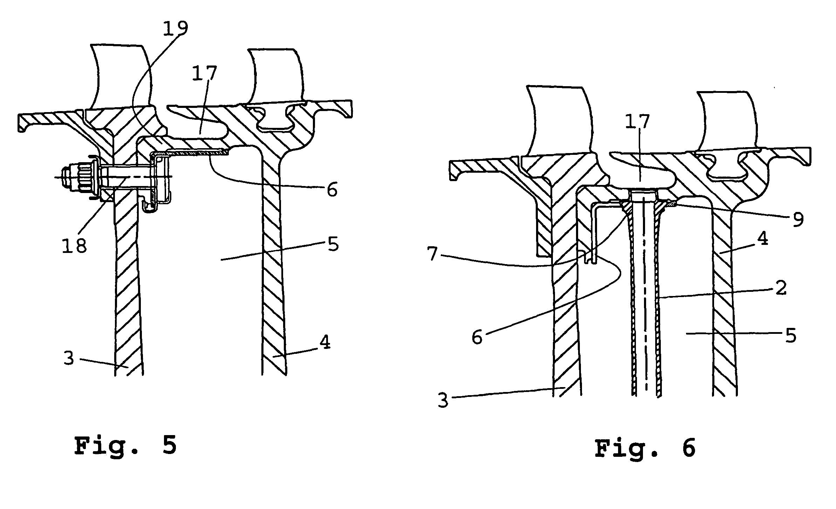

Die Fig. 5 zeigt eine vergrößerte Teil-Schnittansicht längs der Linie V-V von Fig. 4 und zeigen im Detail nochmals den Haltering 6 sowie die Bolzen 18 incl. weiterer Sicherungselemente sowie der benötigten Mutter.

Die Fig. 6 zeigt eine Schnittansicht längs der Linie VII-VII von Fig. 4 mit montierten Sekundärluftröhren. Hierbei ist insbesondere ein nachfolgend noch zu beschreibender Lagerschuh 7 ersichtlich, der am Endbereich jeder Sekundärluftröhre 2 an dieser ausgebildet ist. Weiterhin ist ein Klemmteil 9 gezeigt, welches nachfolgend ebenfalls noch erläutert werden wird und zur Fixierung des Lagerschuhs 7 dient.

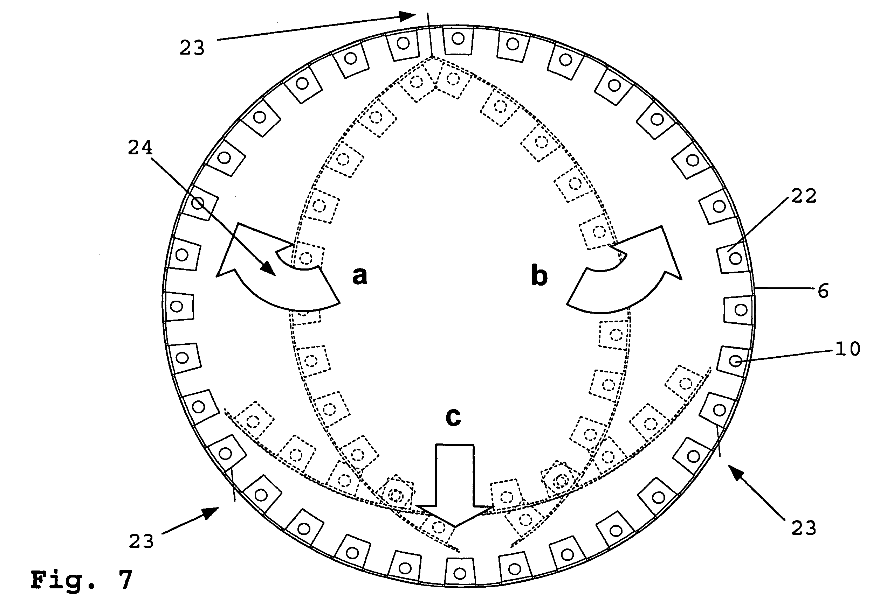

Die Fig. 7 zeigt eine axiale Ansicht des erfindungsgemäßen Trägerrings 6. Dabei ist ersichtlich, dass einzelne Lagerbereiche 22 vorgesehen sind, in welchen jeweils Bolzenausnehmungen 10 für die Bolzen 18 ausgebildet sind.

Die Fig. 7 verdeutlicht, dass der Trägerring 6 aus einzelnen Segmenten a, b und c aufgebaut sein kann, welche die Montage erleichtern. Das Bezugszeichen 23 zeigt jeweils die Teilungen, welche einmal im Wesentlichen radial (oben liegend in Fig. 7) sowie schräg, zu der oberen Teilung angeordnet und ausgebildet sind. Durch die großen Pfeile 24 ergibt sich die Einbaurichtung.

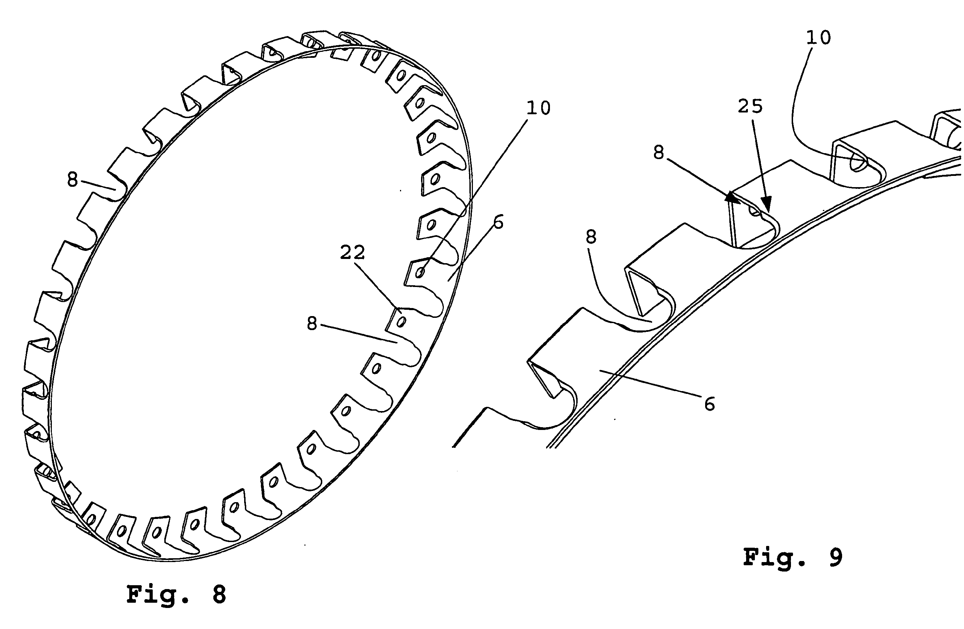

Die Fig. 8 zeigt eine perspektivische Darstellung des erfindungsgemäßen Trägerrings. Dabei ist ersichtlich, dass zwischen jeweils zwei benachbarten Lagerbereichen 22 eine Nut 8 ausgebildet ist, in welche der Lagerschuh 7 der Sekundärluftröhre 2 einschiebbar ist. Das Bezugszeichen 25 zeigt eine Halteschräge oder einen abgefasten, abgeschrägten Bereich, der zur paßgenauen Einspannung des Lagerschuhs 7 dient.

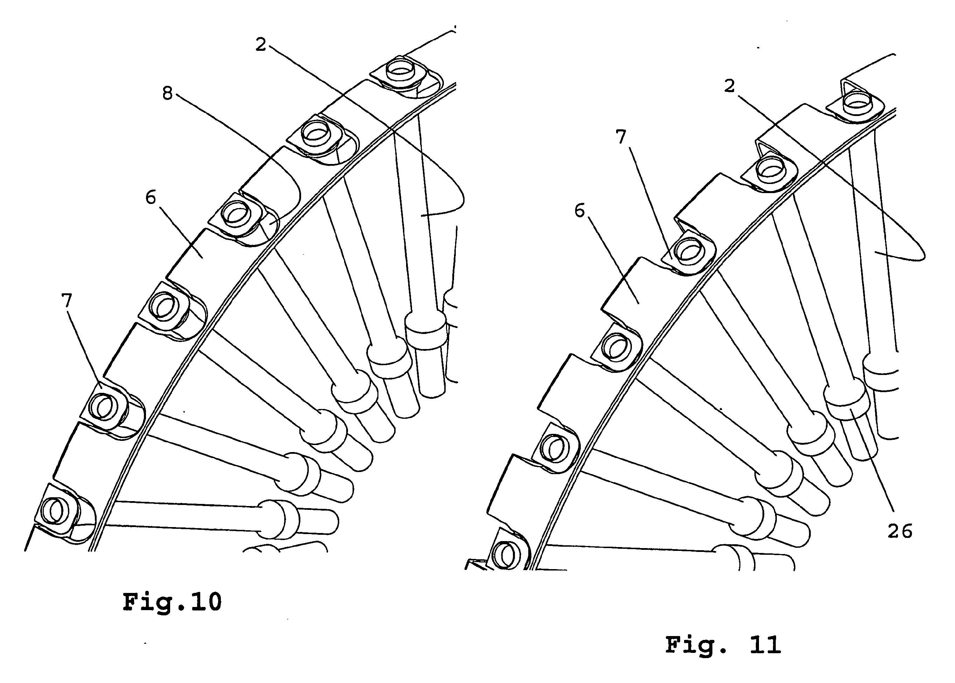

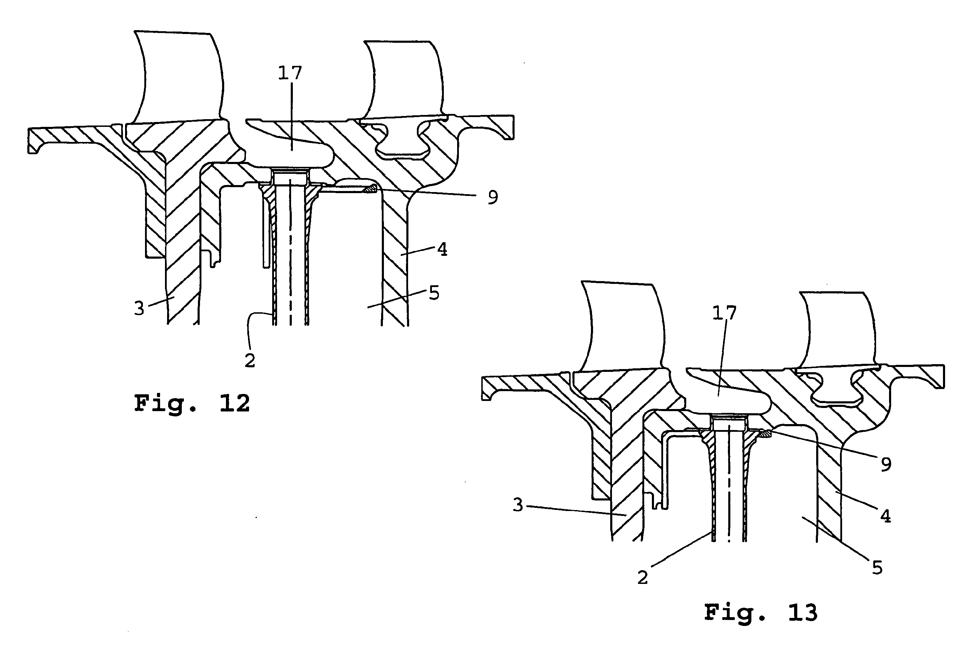

Die Fig. 10 und 11 zeigen Montageschritte, dabei ist ersichtlich, wie die einzelnen Lagerschuhe 7 der Sekundärluftröhren 2 in die Nuten 8 eingeschoben werden. Die Fig. 11 zeigt den fertig montierten, eingeschobenen Zustand. Nachfolgend wird, wie aus Fig. 12 ersichtlich, ein Klemmteil 9 eingeschoben, welches ebenfalls abgeschrägt oder angefast ist. Dieses wirkt mit der Halteschräge 25 zusammen, sodass sich eine Klemmung der Lagerschuhe 7 ergibt.

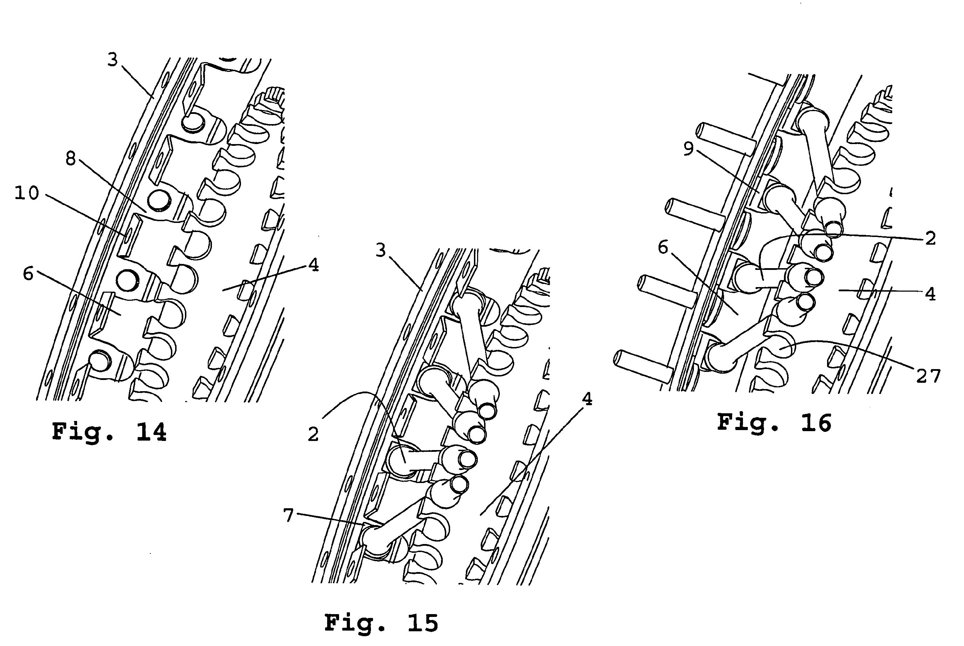

Die Fig. 14 bis 16 zeigen nochmals unterschiedliche Montagezustände in veränderter perspektivischer Ansicht. Die Fig. 14 zeigt einen Zustand, in welchem der Trägerring 6 zwischen die beiden Verdichterscheiben 3 und 4 eingefügt ist. In Fig. 15 ist dargestellt, wie die Sekundärluftröhren vormontiert werden (analog Fig. 10). Die Fig. 16 zeigt eine Darstellung im fertig montierten Zustand, analog Fig. 13.

Es ist dabei insbesondere ersichtlich, dass die radial innen liegenden Endbereiche der Sekundärluftröhren 2 jeweils einen Flansch 26 (siehe Fig. 11) aufweisen, der in eine profilierte, im Wesentlichen kreisförmige Ausnehmung 27 (siehe Fig. 16) der Verdichterscheibe 4 einschiebbar ist. Hierdurch ergibt sich eine wirkungsvolle Lagerung der freien Endbereiche der Sekundärluftröhren 2.

### Bezugszeichenliste

- 1: Verdichter
- 2: Sekundärluftröhre
- 3: Verdichterscheibe
- 4: Verdichterscheibe
- 5: Zwischenscheibenkammer
- 6: Trägerring
- 7: Lagerschuh
- 8: Nut
- 9: Klemmteil
- 10: Bolzenausnehmung
- 11: Rotorschaufel
- 12: Statorschaufel
- 13: Brennkammer
- 14: Turbine
- 15: Nietverbindung
- 16: Trägerscheibe
- 17: Sekundärluftkammer
- 18: Bolzen
- 19: Lagerschenkel
- 20: Radius
- 21: Kammer
- 22: Lagerbereich
- 23: Teilung
- 24: Pfeil
- 25: Halteschräge
- 26: Flansch
- 27: Ausnehmung

## Patentansprüche

1. Wirbelgleichrichter in Röhrenbauweise zur Kühlluftführung in einem Verdichter (1) einer Gasturbine mit sich radial erstreckenden, in einer Zwischenscheibenkammer (5) angeordneten Sekundärluftröhren (2), welche an ihrem radial äußeren Endbereich an einer Verdichterscheibe (3) befestig bar sind, **dadurch gekennzeichnet, dass** der Endbereich der Sekundärluftröhre (2) an einem separaten, in Segmente geteilten Trägerring (6) befestigt ist, welcher mit einer Verdichterscheibe (3) verbindbar ist.

2. Wirbelgleichrichter nach Anspruch 1, **dadurch gekennzeichnet, dass** die Sekundärluftröhre (2) formschlüssig mit dem Trägerring (6) verbunden ist.

3. Wirbelgleichrichter nach Anspruch 2, **dadurch gekennzeichnet, dass** die Sekundärluftröhre (2) an ihrem Endbereich einen Lagerschuh (7) umfaßt, welcher in eine Nut (8) des Trägerrings (6) einschiebbar und mittels eines Klemmteils (9) fixierbar ist.

4. Wirbelgleichrichter nach einem der Ansprüche 1 bis 3, **dadurch gekennzeichnet, dass** der Trägerring (6) als Winkelprofil ausgestaltet ist.

5. Wirbelgleichrichter nach einem der Anspruche 3 oder 4 sofern Anspruch 4 von Anspruch 3 abhängt, **dadurch gekennzeichnet, dass** der Trägerring (6) mit zu den Nuten (8) am Umfang versetzten Bolzenausnehmungen (10) versehen ist.

6. Wirbelgleichrichter nach einem der Ansprüche 1 bis 5, **dadurch gekennzeichnet, dass** der Trägerring (6) in Segmente geteilt ist.

7. Wirbelgleichrichter nach einem der Ansprüche 1 bis 6, **dadurch gekennzeichnet, dass** der radial innen liegende Endbereich der Sekundärluftröhre (2) formschlüssig an der Verdichterscheibe haltbar ist.

## Claims

1. Tube-type vortex reducer for the conduction of cooling air in a compressor (1) of a gas turbine, with radial secondary air tubes (2) arranged in a disk interspace (5), the secondary air tubes (2) being attachable at their radially outward end section to a compressor disk (3), **characterized in that** the end section of the secondary air tube (2) is attached to a separate support ring (6) divided into segments, said support ring (6) being connectable to a compressor disk (3).

2. Vortex reducer in accordance with Claim 1, **characterized in that** the secondary air tube (2) is positively connected to the support ring (6).

3. Vortex reducer in accordance with Claim 2, **characterized in that** the secondary air tube (2) is provided with a mounting shoe (7) at its end section, which is insertable into a slot (8) of the support ring (6) and fixable by means of a clamping element (9).

4. Vortex reducer in accordance with one of the Claims 1 to 3, **characterized in that** the support ring (6) is provided as angle section.

5. Vortex reducer in accordance with one of the Claims 3 or 4, if Claim 4 depends on Claim 3, **characterized in that** the support ring (6) is provided with bolt recesses (10) circumferentially offset relative to the slots (8).

6. Vortex reducer in accordance with one of the Claims 1 to 5, **characterized in that** the support ring (6) is divided into segments.

7. Vortex reducer in accordance with one of the Claims 1 to 6, **characterized in that** the radially inner end section of the secondary air tube (2) is positively attachable to the compressor disk.

## Revendications

1. Réducteur de tourbillons de construction tubulaire destiné à guider de l'air de refroidissement dans un compresseur (1) d'une turbine à gaz avec des tubes d'air secondaire (2) s'étendant dans le sens radial, disposés dans une chambre entre disques (5), et qui peuvent être fixés à un disque de compresseur (3) à leur extrémité extérieure dans le sens radial, **caractérisé en ce que** l'extrémité extérieure du tube d'air secondaire (2) est fixée à un anneau porteur (6) séparé, divisé en segments, qui peut être relié à un disque de compresseur (3).

2. Réducteur de tourbillons selon la revendication n° 1, **caractérisé en ce que** le tube d'air secondaire (2) est relié mécaniquement à l'anneau porteur (6).

3. Réducteur de tourbillons selon la revendication n° 2, **caractérisé en ce que** le tube d'air secondaire (2) comprend à son extrémité un talon de montage (7), qui peut être inséré dans une encoche (8) de l'anneau porteur (6) et fixé moyennant une pièce de serrage (9).

4. Réducteur de tourbillons selon une des revendications n° 1 à 3, **caractérisé en ce que** l'anneau porteur (6) présente un profil en L.

5. Réducteur de tourbillons selon une des revendications n° 3 ou 4, si la revendication n° 4 dépend de la revendication n° 3, **caractérisé en ce que** l'anneau porteur (6) est pourvu d'évidements de boulons (10) disposés en déport par rapport aux encoches (8) sur la circonférence.

6. Réducteur de tourbillons selon une des revendications n° 1 à 5, **caractérisé en ce que** l'anneau porteur (6) est divisé en segments.

7. Réducteur de tourbillons selon une des revendications n° 1 à 6, **caractérisé en ce que** l'extrémité intérieure dans le sens radial du tube d'air secondaire (2) peut être attachée mécaniquement au disque de compresseur.
